# EUROPÄISCHE PATENTANMELDUNG

(11) **EP 4 810 747 A1**
(43) Veröffentlichungstag der Anmeldung: **23.09.2026**
(21) Anmeldenummer: 26161984.5
(22) Anmeldetag: 03.03.2026
(51) Int. Cl.: E04G 21/04, B28B 1/00, B33Y 10/00, B33Y 80/00, G05B 19/4099

(54) **VERFAHREN ZUM 3D-DRUCKEN VON GEBÄUDEN**

(30) Priorität: 12.03.2025 DE 102025109504
(71) Anmelder: 3D-bautec. solutions UG, 20354 Hamburg (DE)
(72) Erfinder: Gresser, Nicolas Maximilian, 78234 Engen (DE)
(74) Vertreter: Rüger Abel IP Legal Solutions GmbH

(57) **Zusammenfassung**

Es ist ein Verfahren (100) zum 3D-Drucken eines Gebäudes (2) unter Verwendung eines fließfähigen Baumaterials geschaffen. In dem Verfahren (100) wird in einem ersten Schritt (S1) ein 3D-Modell des Gebäudes (2) erstellt. In einem nächsten Schritt (S2) wird das 3D-Modell des Gebäudes (2) in Wandabschnitte (33, 33a-d) zerlegt, und es wird eine Reihenfolge definiert, in der die Wandabschnitte (33, 33a-d) nacheinander gedruckt werden sollen. Jeder Wandabschnitt (33, 33a-d) wird mit wenigstens einer Anschlusskante (36, 36a, 36b) definiert, die der Verbindung mit einem benachbarten Wandabschnitt (33, 33a-d) dient und die eine gestufte Konfiguration mit mehreren vertikalen Stufen (37, 37a, 37b) aufweist. In einem weiteren Schritt (S3) wird jeder der Wandabschnitte (33, 33a-d) in eine festgelegte Reihe von Schichten (41, 41a-n, 41'a-i) aufgeteilt, die unter Verwendung eines 3D-Druckers (4, 4a, 4b) übereinander aufzutragen sind, um den jeweiligen Wandabschnitt (33, 33a-d) aufzubauen. In einem noch weiteren Schritt (S4) werden die Wandabschnitte (33, 33a-d) nacheinander in der definierten Reihenfolge durch schichtweises Auftragen des fließfähigen Baumaterials mittels des 3D-Druckers (4, 4a, 4b) entsprechend der festgelegten Reihe von Schichten (41, 41a-n, 41'a-i) gedruckt, um das Gebäude (2) physisch zu erzeugen. Die Wandabschnitte (33, 33a-d) werden derart gedruckt, dass benachbarte Wandabschnitte (33, 33a-d) an miteinander verbundenen Anschlusskanten (36, 36a, 36b) eine in Bezug auf eine horizontale Ebene schräge, gestufte Verbindungsstelle (34, 34a, 34b) bilden.

## Beschreibung

Die vorliegende Erfindung betrifft allgemein den Gebäudebau und insbesondere den dreidimensionalen (3D) Bau von Gebäuden mittels eines 3D-Druckers unter Verwendung flüssiger Baumaterialien.

Es ist allgemein üblich, im Gebäudebau frischen Beton, der im Allgemeinen aus Zement, Wasser und Zuschlagstoffen, wie Sand und Kies, besteht, in flüssiger oder plastischer Form in Formen, sogenannte Schalung, zu gießen, in denen er dann aushärtet. Die Schalung ist eine temporäre Konstruktion, die die Form des Betons während des Aushärtens bestimmt. Sie besteht meist aus Holz, Metall oder Kunststoff. Die Schalung wird sorgfältig montiert, um die exakten Abmessungen und die gewünschte Form der Betonstruktur zu gewährleisten. Wenn der Beton aushärtet, verbindet er sich zu einer steinharten, stabilen Struktur, die die Grundlage vieler Gebäude bildet.

Die Schalung von Beton ist aber relativ kostspielig in der Beschaffung und aufwendig beim Auf- und Abbau. Sie ist auch weder ressourcen- noch umweltschonend. Es kann einiges an CO₂ freigesetzt werden und Abfall entstehen. Außerdem ist die mögliche Architektur durch die Schalung begrenzt. Komplexere Designs von Gebäuden, die von geraden Wänden abweichen, lassen sich mit vertretbarem Aufwand kaum realisieren.

Es sind auch Vorrichtungen und Verfahren zum 3D-Drucken von Gebäuden bekannt geworden. Diese Vorrichtungen umfassen einen 3D-Drucker mit einem mobilen Druckkopf, der eine Spritzdüse trägt, durch die flüssiges Baumaterial ausgegeben wird, während der Druckkopf entlang eines vorgegebenen Wegs in Abhängigkeit von der Form des zu bauenden Gebäudes bewegt wird. Das flüssige Baumaterial wird Schicht für Schicht aufgetragen und aushärten gelassen. Auf diese Weise können beliebige und relativ komplexe dreidimensionale Strukturen geschaffen werden, die der Gebäudearchitektur kaum Grenzen setzen. Systeme und Verfahren zum automatisierten 3D-Druck von Gebäuden oder Strukturen und deren Betriebsverfahren sind beispielsweise in US 2016 / 0 361 834 A1 und EP 3 833 833 B1 beschrieben.

Ein Problem, dass sowohl beim Errichten von Gebäuden durch Schalung von Beton als auch beim 3D-Druck auftritt, betrifft die Bildung von kalten Fugen (sogenannten "Cold Joints"), die Bereiche in der errichteten Struktur sind, an denen zwei Schichten von Beton aufeinandertreffen, die nicht richtig miteinander verbunden sind. Derartige kalte Fugen können durch eine Verzögerung beim Betonieren verursacht sein, wenn eine frische Betonschicht auf eine bereits ausgehärtete oder teilweise gehärtete Schicht aufgetragen oder an diese angefügt wird. Die Zusammensetzung des flüssigen Baumaterials, beispielsweise fehlende oder unzureichende Verbindungsmittel, können die Bildung von kalten Fugen ebenfalls begünstigen. Die kalten Fugen führen zu strukturellen Diskontinuitäten, die die Festigkeit und Haltbarkeit des Betons beeinträchtigen können. Sie können auch erhöhte Wasserdurchlässigkeit zur Folge haben und müssen gegebenenfalls durch aufwendige Methoden abgedichtet werden. Dies gilt es zu vermeiden.

Ausgehend hiervon ist es eine Aufgabe der vorliegenden Erfindung, ein Verfahren zum Errichten von Gebäuden zu schaffen, das eine schnelle und kosteneffiziente Errichtung von Gebäuden sogar mit komplexen Designs ermöglicht, aber die vorstehend erwähnten Nachteile reduziert. Insbesondere sollte die Bildung von kalten Fugen in dem errichteten Gebäude reduziert werden können. Außerdem sollte das Verfahren auch einen ressourcenschonenden und nachhaltigen Gebäudebau ermöglichen.

Zur Lösung dieser Aufgabe ist gemäß der Erfindung ein Verfahren zum 3D-Drucken eines Gebäudes unter Verwendung eines fließfähigen Baumaterials geschaffen, wobei das Verfahren aufweist: Erhalten eines 3D-Modells des Gebäudes; Zerlegen des 3D-Modells des Gebäudes, um Wandabschnitte und eine Reihenfolge zu definieren, in der die Wandabschnitte nacheinander gedruckt werden sollen, wobei jeder Wandabschnitt eine gegebene Höhe und Länge hat und wenigstens eine Anschlusskante aufweist, die die Länge des Wandabschnitts begrenzt und der Verbindung mit einem benachbarten Wandabschnitt dient, wobei die wenigstens eine Anschlusskante eine gestufte Konfiguration mit mehreren vertikalen Stufen aufweist; Aufteilen jedes der Wandabschnitte in eine festgelegte Reihe von Schichten, die unter Verwendung eines 3D-Druckers übereinander aufzutragen sind, um den jeweiligen Wandabschnitt aufzubauen; und Drucken der Wandabschnitte nacheinander in der definierten Reihenfolge durch schichtweises Auftragen des fließfähigen Baumaterials mittels des 3D-Druckers entsprechend der festgelegten Reihe von Schichten, wobei benachbarte Wandabschnitte an miteinander verbundenen Anschlusskanten eine in Bezug auf eine horizontale Ebene schräge, gestufte Verbindungsstelle bilden.

Gemäß der Erfindung kann beispielsweise ein von Architekten oder Ingenieuren erstelltes detailliertes 3D-Modell des zu errichteten Gebäudes, das mit einer speziellen Software, z.B. CAD-Software, errichtet wird, als Basis für einen Bauplan für den 3D-Drucker herangezogen werden. Das 3D-Modell kann auch aus 2D-Plänen erstellt werden.

Anschließend wird das 3D-Modell des Gebäudes in Wandabschnitte zerlegt, die nacheinander gedruckt werden sollen. Die Größe der Wandabschnitte und die Reihenfolge, in der diese gedruckt werden sollen, werden speziell festgelegt, um die Verzögerung zwischen dem Drucken aufeinander folgender Wandabschnitte auf ein Minimum zu reduzieren, damit auf- und aneinandertreffende Schichten des Baumaterials gemeinsam aushärten und sich gut miteinander verbinden können. Unterstützt wird dies ferner dadurch, dass die Wandabschnitte jeweils die wenigstens eine Anschlusskante aufweisen, die die gestufte Form oder Konfiguration mit den mehreren vertikalen Stufen aufweist. Diese Konfiguration begünstigt es, dass nacheinander gedruckte Wandabschnitte sich an den Anschlusskanten gut miteinander verbinden und an der schrägen, gestuften Verbindungsstelle ein weitgehend homogenes Gefüge bilden können, das eine stabile, feste und dauerhafte Verbindung ergibt und frei von strukturellen Diskontinuitäten ist. Damit kann die Bildung kalter Fugen (Cold Joints) auf ein Minimum reduziert werden.

Die Zerlegung des 3D-Modells in die Wandabschnitte und die Festlegung der Wandabschnitte und der Form der Anschlusskanten kann vorteilhafterweise computerunterstützt, mit einer speziellen Software, z.B. einem sogenannten "Slicer", vorgenommen werden, der in 3D-Druckprozessen oft verwendet wird, um ein 3D-Modell in dünne, flache Schichten aufzuteilen, die nacheinander von einem 3D-Drucker gedruckt werden sollen. Erfindungsgemäß wird der Slicer vorzugsweise modifiziert, um Parameter für den Druckprozess, insbesondere die Bewegung des 3D-Druckers, Parameter des Baumaterials, wie die Extrusionsgeschwindigkeit, gegebenenfalls die Temperatur, die Schichtdicke, die Formen und Größen der Wandabschnitte und insbesondere die Formen und Größen der Anschlusskanten mit den Stufen in nach Wunsch und Bedarf vorzugeben. Der Slicer kann dann jeden der Wandabschnitte in die festgelegte Reihe von Schichten aufteilen, die nacheinander gedruckt werden sollen, und beispielsweise sogenannte G-Codes erstellen, die im Wesentlichen geografische Codes, z.B. XY-Koordinaten, sind, die der 3D-Drucker als Befehle versteht, wie er das Gebäude Schicht für Schicht aufbauen soll. Die Zerlegung des Gebäudes in die einzelnen Wandabschnitte kann wenigstens zum Teil manuell oder aber bevorzugterweise vollständig automatisiert, computergestützt erfolgen.

In bevorzugten Ausführungsformen des erfindungsgemäßen Verfahrens können die Länge der Wandabschnitte und die Größe, einschließlich Höhe und Breite der Stufen auf der Basis der Aushärteeigenschaften, insbesondere der Erstarrungsgeschwindigkeit und der Fließeigenschaften des eingesetzten Materials und der Druckgeschwindigkeit bestimmt und definiert werden, um die Gefahr der Bildung von kalten Fugen zu minimieren. Als weitere Parameter können hier auch die Luftfeuchtigkeit und/oder die Temperatur am Aufbauort sowie die Temperatur des Baummaterials berücksichtigt werden. Die Temperatur ist insbesondere bei der Verwendung von flüssigem Lehm (Ton und Schluff) als Baummaterial wichtig. Bei der Verwendung von Beton könnte auch die Zusammensetzung, einschließlich der Sandanteile, chemischen Zusätze und dergleichen, die die chemische Reaktion zwischen Zement und Wasser beim Abbinden des Betons beeinflussen, zur Berechnung der Erstarrungsgeschwindigkeit für die Festlegung der Wandabschnitte und der Anschlusskanten herangezogen werden.

Es kann vorteilhaft sein, wenn jede Stufe der wenigstens einen Anschlusskante eine vertikale Anschlussfläche, die beim 3D-Druck mit einer vertikalen Anschlussfläche einer Stufe der Anschlusskante eines benachbarten Wandabschnitts verbunden wird, um eine vertikale Überlappung zu bilden, und eine horizontale Anschlussfläche aufweist, die beim 3D-Druck mit einer horizontalen Anschlussfläche einer Stufe einer Anschlusskante eines benachbarten Wandabschnitts verbunden wird, um eine horizontale Überlappung zu bilden. Die horizontalen und vertikalen Überlappungen sind einfach zu erzeugen und unterstützen eine gemeinsame Aushärtung und gute Verbindung des Materials an den Anschlussflächen.

In vorteilhaften Ausführungsformen kann jede Stufe der wenigstens einen Anschlusskante derart definiert und gedruckt werden, dass die Breite der Stufe oder der horizontalen Anschlussfläche, also die horizontale Überlappung, mindestens gleich der Hälfte der Höhe der Stufe oder der vertikalen Anschlussfläche, also die vertikale Überlappung, ist. Eine ausreichende horizontale Überlappung ist für die gute Verbindung an den Anschlusskanten wichtig. Bevorzugterweise kann die Breite jeder Stufe oder die horizontale Überlappung mindestens gleich der Höhe der Stufe oder die vertikale Überlappung sein.

In einer besonders bevorzugten Ausführungsform sind die Breite und die Höhe jeder Stufe jeder Anschlusskante der wenigstens einen Anschlusskante in etwa gleich. Es kann eine schräge Verbindungs- bzw. Schnittstelle unter einem Winkel von etwa 45° zur Horizontalen gebildet werden, die sich als besonders vorteilhaft erwiesen hat. Die Breite und/oder Höhe der Stufen der Anschlusskanten kann/können prinzipiell auch innerhalb einer Anschlusskante je nach Bedingungen, z.B. in Eckbereichen von Gebäuden, variieren.

Für eine stabile Anschlussverbindung kann die wenigstens eine Anschlusskante jedes der benachbarten Wandabschnitte mit mehr als zwei, vorzugsweise wenigstens vier Stufen definiert und gedruckt werden. In besonders bevorzugten Ausführungsformen können wenigstens acht Stufen pro Anschlusskante vorgesehen werden. Die horizontalen und vertikalen Überlappungen der Stufen können so gleichmäßig über die Höhe der Wandabschnitte verteilt werden.

Im Allgemeinen kann jede horizontale Lage jedes Wandabschnitts, die eine einzelne Stufe definiert, durch eine einzige Schicht des Baumaterials gebildet werden, die in einem einzelnen Vorschubvorgang aufgetragen wird. Die Höhe der Stufen entspricht dann der Höhe der von der Spritzdüse des 3D-Druckers ausbringbaren Schicht. Bedarfsweise, insbesondere wenn höhere Stufen erwünscht sind, kann jede horizontale Lage jedes Wandabschnitts, die eine Stufe definiert, auch durch mehrere übereinander aufgetragene Schichten des Materials gebildet werden. Der 3D-Drucker bildet also jede Stufe durch Aufbringung mehrerer Schichten, die in mehreren Vorschubvorgängen ohne Versatz übereinander aufgetragen werden.

Gemäß der Erfindung wird jede Schicht vorzugsweise in einer horizontalen Ebene aufgetragen. Dies bedeutet, dass der Druckkopf mit der Spritzdüse innerhalb eines jeden Schichtauftragsvorgangs lediglich in einer horizontalen Ebene bewegt werden muss. Der Druckkopf mit der Spritzdüse muss lediglich zwischen zwei Schichtauftragungen vertikal bewegt werden, um die nächste Schicht über der vorherigen auftragen zu können. Insgesamt kann die Komplexität des 3D-Druckers und dessen Steuerung relativ gering sein.

Im Allgemeinen werden die einzelnen Schichten linear aufgetragen, um gerade Wandabschnitte zu bilden. Durch den 3D-Druck können die Schichten prinzipiell aber auch gekrümmt, rund oder beliebig gestaltet sein, um komplexe Wandformen zu schaffen. Es lassen sich so sehr vielfältige Designs von Gebäuden realisieren.

In vorteilhaften Ausführungsformen kann wenigstens ein Wandabschnitt, beispielsweise der erste Wandabschnitt, mit dem der 3D-Druck des Gebäudes startet, derart definiert und gedruckt werden, dass er gestufte Anschlusskanten auf beiden Seiten des Wandabschnitts, betrachtet im Längsverlauf des Wandabschnitts, aufweist. Die Schrägung verläuft dann vorzugsweise an der ersten Anschlusskante ansteigend und an der entgegengesetzten Anschlusskante abfallend. Die Zerlegung des 3D-Modells des Gebäudes in die Wandabschnitte und die Aufteilung der Wandabschnitte in die einzelnen Schichten kann derart vorgenommen werden, dass der 3D-Drucker vorteilhafterweise Wandabschnitte zeitnah aufeinanderfolgend auf beiden Seiten des beispielsweise ersten Wandabschnitts mit den zwei schrägen, gestuften Anschlusskanten aufbaut, um Verzögerungen beim Drucken nebeneinanderliegender Wandabschnitte zu minimieren und kalte Fugen zwischen diesen zu vermeiden.

In einer vorteilhaften Weiterbildung kann wenigstens ein Wandabschnitt, beispielsweise der erste Wandabschnitt, mit dem der 3D-Druck des Gebäudes startet, derart definiert und gedruckt werden, dass er mehr als zwei Anschlusskanten und eine schräge, gestufte Konfiguration an jeder freien Anschlusskante aufweist. Beispielsweise kann ein derartiger Wandabschnitt eine T-förmige oder kreuzförmige Konfiguration mit drei oder vier Wandteilen haben, die jeweils durch eine schräge, gestufte freie Anschlusskante begrenzt sind. Das Drucken der nachfolgenden Wandabschnitte erfolgt dann vorzugsweise derart, dass benachbarte Wandabschnitte möglichst zeitnah an jede der gestuften Anschlusskanten des beispielsweise ersten Wandabschnitts angefügt werden.

In besonders vorteilhaften Ausführungsformen eines beliebigen vorstehend erwähnten Verfahrens werden vorzugsweise alle Wandabschnitte des Gebäudes an vorzugsweise jeder Anschlusskanten mit einer schrägen, gestuften Konfiguration gebildet.

Vorteilhafterweise kann der 3D-Drucker zwischen aufeinanderfolgend gedruckten Wandabschnitten in seiner Position verfahren werden. Durch Bewegen des 3D-Druckers in einer horizontalen Ebene kann das Druckobjekt, also das errichtete Gebäude, stetig wachsen. Dies erfordert zwar einen bewegbaren, beispielsweise fahrbaren 3D-Drucker. Es können jedoch deutlich kleinere 3D-Drucker verwendet werden, um auch größere Gebäude aufzubauen. Insgesamt können Komplexität und Kosten für die Beschaffung des 3D-Druckers und die Errichtung und Auflösung der Baustelle reduziert werden.

In vorteilhaften Ausführungsformen eines beliebigen vorstehend erwähnten Verfahrens kann eine Spritzdüse des 3D-Druckers um wenigstens eine horizontale Achse verschwenkbar eingerichtet sein, und die Spritzdüse kann beim Drucken in einem variablen Winkel relativ zu einer horizontalen Druckebene ausgerichtet werden, um das Baumaterial in verschiedenen Orientierungen aufzutragen. Damit können auch geneigte oder gekrümmte oder weitere kompliziertere Strukturen in Gebäudewänden und -decken durch 3D-Druck relativ aufwandsarm realisiert werden. Beispielsweise lässt sich ein Tür- oder Fenstersturz, z.B. ein Sturzbogen, in einem Wandabschnitt drucken, ohne hierzu zusätzlich einen Träger aus Stahl, Beton oder dergleichen verwenden zu müssen.

In einer vorteilhaften Weiterbildung eines beliebigen vorstehend erwähnten Verfahrens können wenigstens zwei 3D-Drucker zeitgleich betrieben werden, um Wandabschnitte simultan zu drucken. Ein erster 3D-Drucker kann somit einen Wandabschnitt drucken, während gleichzeitig ein zweiter 3D-Drucker einen anderen Wandabschnitt druckt. Durch mehrere zeitgleich laufende 3D-Drucker wird der Druckraum modular erweiterbar und ein schnelleres, effizienteres Drucken ermöglicht, was insbesondere der Errichtung von größeren Gebäuden zugute kommt. Es kann auch ein Schwarm von mehr als zwei 3D-Druckern zum simultanen Drucken von Wandabschnitten eines Gebäudes eingesetzt werden. Die Zerlegung des 3D-Modells des Gebäudes in geeignete Wandabschnitte und die Zuordnung der Wandabschnitte zu einzelnen 3D-Druckern können im Sinne einer Minimierung der Bauzeit vorgenommen werden. Die zwei oder mehreren 3D-Drucker können auf unterschiedlichen, voneinander unabhängigen Pfaden in koordinierter Weise verfahren oder betrieben werden, um die zugehörigen Wandabschnitte jeweils zu drucken und schnell zusammenzufügen.

Die Erfindung ermöglicht eine schnelle und kosteneffiziente Errichtung von Gebäuden bei reduzierten Bauzeiten und mit reduziertem Materialverbrauch und geringer Materialverschwendung. Durch einen hohen Grad an Automatisierung kann der Materialverbrauch präzise geplant und eingehalten werden. Es können sehr komplexe Designs realisiert werden, die von Einfamilienhäusern bis hin zu Mehrfamilienhäusern oder sogar mehrstöckigen öffentlichen Gebäuden reichen. Durch Verwendung natürlicher Baumaterialien, wie beispielsweise Lehm und Ton, wird der CO₂-Ausstoß verringert und die Nachhaltigkeit gefördert. Es können auch recycelte Materialien verwendet werden. Jedenfalls kann Abfall reduziert werden.

Weitere vorteilhafte Ausführungsformen der Erfindung und deren Vorteile und Effekte erschließen sich aus der nachfolgenden Beschreibung bevorzugter Ausführungsformen der Erfindung, die in Verbindung mit den beigefügten Zeichnungen beschrieben sind. In den Zeichnungen sind gleiche Elemente, die in verschiedenen Figuren dargestellt sind, mit den gleichen Bezugszeichen bezeichnet, und es gilt die jeweilige Beschreibung des Elementes entsprechend, sofern nichts anderes angegeben ist. Es zeigen:
Figur 1 ein System zum 3D-Drucken von Gebäuden in einer stark schematisierten Darstellung;
Figur 2 einen beispielhaften 3D-Drucker zur Verwendung in dem System nach Figur 1 in einer vereinfachten perspektivischen Darstellung;
Figur 3 ein Flussdiagramm einer Ausführungsform eines erfindungsgemäßen Verfahrens zum 3D-Drucken eines Gebäudes;
Figuren 4a-4c perspektivische Ansichten, die einen beispielhaften Prozess des 3D-Drucks von Wandabschnitten eines Gebäudes in unterschiedlichen Stadien des Verfahrens nach Figur 3 veranschaulichen, in stark vereinfachten Darstellungen;
Figur 5 eine Draufsicht auf benachbarte Wandabschnitte eines Gebäudes, die unter Verwendung des Verfahrens gemäß der Ausführungsform nach Figur 3 gedruckt werden, in vereinfachter Darstellung; und
Figur 6 eine Draufsicht von oben auf ein Gebäude, das unter Verwendung des erfindungsgemäßen 3D-Druckverfahrens gemäß einer Weiterbildung errichtet wird, in stark schematisierter Darstellung.

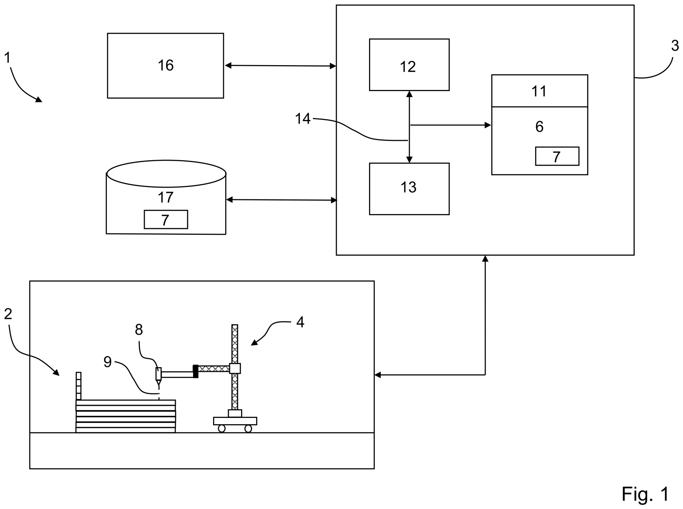

Bevor auf das erfindungsgemäße Verfahren zum 3D-Drucken eines Gebäudes näher eingegangen wird, soll zunächst ein beispielhaftes System 1 zum 3D-Drucken von Gebäuden vorgestellt werden, das in Figur 1 dargestellt ist und sich zur Durchführung des erfindungsgemäßen Verfahrens eignet. Es sollte erwähnt werden, dass das in Figur 1 dargestellte System 1 nur exemplarischer Natur ist und das erfindungsgemäße Verfahren zum 3D-Drucken von Gebäuden auch mit anderen Systemen verwendet werden kann. 3D-Druck, auch als additive Fertigung bekannt, bezeichnet eine Bautechnologie, bei der Materialien schichtweise aufgetragen werden, um dreidimensionale Strukturen zu erzeugen. Diese Technologie hat inzwischen auch im Bauwesen Einzug gefunden.

Wie aus Figur 1 ersichtlich, umfasst das System 1 zum 3D-Drucken eines Gebäudes 2 im Wesentlichen ein Computersystem 3 und eine hier als 3D-Drucker 4 bezeichnete Vorrichtung für den 3D-Druck von Gebäuden. Das Computersystem 3 umfasst ein computergestütztes Steuerungssystem 6 für die additive Fertigung, also den 3D-Druck, das den 3D-Drucker 4 im Betrieb steuert. Wie nachstehend näher beschrieben, ist das Steuerungssystem 6 eingerichtet, um einen Programmcode 7 auszuführen, der einen Satz computerausführbarer Befehle umfasst, die das Gebäude 2 definieren, um das Gebäude 2 unter Verwendung des 3D-Druckers 4 physisch zu erzeugen. Der 3D-Drucker 4 und das erfindungsgemäße 3D-Druckverfahren können unterschiedliche flüssige oder fließfähige Baumaterialien in Form von speziellen Betonarten, die Zement, Sand und weitere chemische Zusätze umfassen können, flüssigem Lehm, dem auch Fasern zur Verstärkung beigemischt sein können, oder weiteren alternativen und innovativen Baumaterialien, die auch recycelte Materialien, einschließlich Kunststoffe, umfassen können, verwenden.

Wie dargestellt, kann eine auch als Extruder bezeichnete Spritzdüse 8 des 3D-Druckers das Baumaterial 9 schichtweise auftragen, um das Gebäude 2 zu errichten. Die Spritzdüse 8 kann die nächste Schicht des Baumaterials 9 auf die vorherige Schicht in einer Weise direkt aufbringen oder drucken, wie dies durch den Programmcode 7 definiert ist. Der 3D-Drucker 4 oder Teile des 3D-Druckers 4 können sich beim 3D-Druck des Gebäudes 2 bewegen, um die Hinzufügung einer neuen Schicht oder die Erzeugung eines weiteren Wandabschnitts des Gebäudes 2 zu ermöglichen. Insbesondere kann die Spritzdüse 8 nach dem Auftragen einer Schicht des Baumaterials 9 angehoben werden, um eine weitere Schicht aufzutragen.

Das Steuerungssystem 6 ist, wie veranschaulicht, in dem Computersystem 3 in Form des Computerprogrammcodes 7 implementiert. Zur Ausführung des Programmcodes 7 umfasst das Steuerungssystem 6 vorzugsweise einen Arbeitsspeicher 11, einen Prozessor 12, eine Eingabe/Ausgabe(E/A)-Schnittstelle 13 und einen Bus 14. Ferner ist das Computersystem 3 veranschaulicht, wie es mit einer externen E/A-Vorrichtung oder -Ressource 16 und einem externen Speichersystem 17 in Kommunikationsverbindung steht. Teile des Speichersystems 17 können auch intern, innerhalb des Computersystems 3 enthalten sein. Allgemein führt der Prozessor 12 einen Computerprogrammcode, wie beispielsweise das Steuerungssystem 6 für die additive Fertigung aus, der in dem Speichersystem 17 gespeichert ist und in den Arbeitsspeicher 11 geladen wird, entsprechend den Befehlen des Programmcodes 7, der, wie hierin beschrieben, das Gebäude 2 repräsentiert. Bei der Ausführung des Programmcodes 7 kann der Prozessor 12 Daten in den Arbeitsspeicher 11, das Speichersystem 17, die E/A-Vorrichtung 16 und/oder den 3D-Drucker 4 schreiben oder aus diesen lesen. Der Bus 14 stellt eine Kommunikationsverbindung zwischen den jeweiligen Komponenten in dem Computersystem 6 bereit, und die E/A-Vorrichtung 16 kann jede Vorrichtung umfassen, die einem Benutzer ermöglicht, mit dem Computersystem 3 zu interagieren (wie z.B. eine Tastatur, eine Zeigervorrichtung, eine Anzeige, etc.).

Das Computersystem 3 ist nur für eine von vielen verschiedenen möglichen Kombinationen aus Hardware und Software repräsentativ. Zum Beispiel kann der Prozessor 12 eine einzige Verarbeitungseinheit umfassen oder über eine oder mehrere Verarbeitungseinheiten an einem oder mehreren Orten, beispielsweise an einem Client und einem Server, verteilt sein. In ähnlicher Weise kann das Speichersystem 17 sich an einem oder mehreren physischen Orten befinden. Der Arbeitsspeicher 11 und das Speichersystem 17 können eine beliebige Kombination von verschiedenen Arten von nichtflüchtigen, computerlesbaren Speichermedien umfassen, zu denen magnetische Medien, optische Medien, Schreib/Lese-Speicher (RAM), Nur-Lese-Speicher (ROM), etc. gehören. Das Computersystem 3 kann eine beliebige Art einer Rechenvorrichtung, wie beispielsweise einen Netzwerkserver, einen Desktop-Computer, einen Laptop, ein Handgerät, wie beispielsweise ein Tablet, ein Smartphone, einen Pager, einen persönlichen digitalen Assistenten (PDA), etc. umfassen.

Ein additiver Fertigungsprozess oder 3D-Druck zum Bau eines Gebäudes beginnt bei einem nichtflüchtigen computerlesbaren Speichermedium (z.B. dem Arbeitsspeicher 11, dem Speichersystem 17, etc.), das den Programmcode 7 speichert, der das Gebäude 2 repräsentiert. Zum Beispiel kann der Programmcode 7 ein genau definiertes 3D-Modell des Gebäudes 2 enthalten, das von Architekten oder Ingenieuren mittels einer weiten Vielfalt allgemein bekannter Softwareprodukte für computergestütztes Design (CAD), wie z.B. AutoCAD^{®}, TurboCAD^{®}, DesignCAD 3D MAX, etc., erzeugt werden kann. In dieser Hinsicht kann der Programmcode 7 ein beliebiges heutzutage bekanntes oder künftig entwickeltes Dateiformat haben. Zum Beispiel kann der Programmcode 7 im STL (Standard Tessellation Language)-Format, dass ein Standard von CAD-Programmen für Stereolithografiesysteme ist, oder auch im AMF (Additive Manufacturing File)-Format vorliegen, das ein offenes Dateiformat ist, das auf XML (Extensible Markup Language) basiert und zur Beschreibung von Objekten für additive Fertigungsprozesse, wie 3D-Druck, verwendet wird.

Der Programmcode 7 kann nach Bedarf zwischen verschiedenen Formaten übersetzt, in einen Satz von Datensignalen umgesetzt und übersandt werden, als ein Satz Datensignale empfangen und in einen Programmcode umgewandelt werden, gespeichert werden, etc. Der Programmcode 7 kann in das Computersystem 3 eingegeben werden und kann von Architekten, Ingenieuren, etc. stammen. Der Programmcode kann auch ausgehend von 2D-Plänen eines Gebäudes erstellt werden. In jedem Fall führt das Steuerungssystem 6 den Programmcode 7 aus, indem es das Gebäude 2 in eine Reihe dünner Schichten unterteilt, die es unter Verwendung des 3D-Druckers 4 in aufeinanderfolgenden Schichten des flüssigen bzw. fließfähigen Baumaterials 9 aufbaut. Nach Aushärtung des Baumaterials 9 ist das Gebäude 2 mit einer festen Struktur geschaffen, die vielfältigen Endbearbeitungsprozessen, wie Montage von weiteren Komponenten, Feinbearbeitung und dergleichen, unterworfen werden kann.

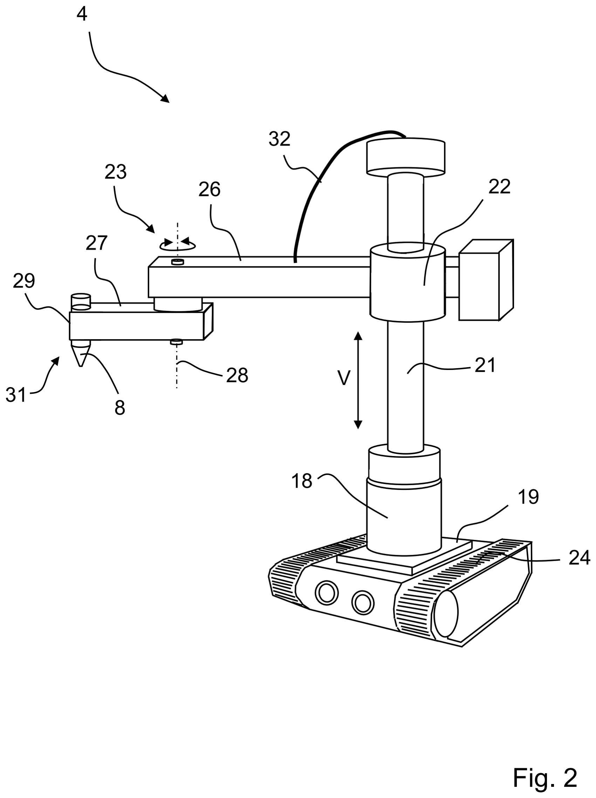

Wie aus Figur 1 ersichtlich, ist der 3D-Drucker bewegbar, um auch größere Gebäude abschnittsweise erzeugen zu können. Ein beispielhafter 3D-Drucker 4, der sich zur Verwendung in dem System 1 und für das erfindungsgemäße Verfahren eignet, ist in größeren Einzelheiten in Figur 2 dargestellt. Es soll jedoch erwähnt werden, dass der dargestellte 3D-Drucker 4 lediglich ein Beispiel für einen 3D-Drucker darstellt, der sich zur Umsetzung der Erfindung eignet, und der 3D-Drucker weit unterschiedliche Formen einnehmen kann.

In der beispielhaften Ausführungsform nach Figur 2 umfasst der 3D-Drucker 4 eine Basis 18, die auf einem Fahrgestell 19 befestigt ist, eine langgestreckte Säule 21, die sich entlang einer Hubachse erstreckt, die in eine vertikale Richtung V ausgerichtet ist, eine Koppeleinheit 22 und einen Ausleger 23. Das Fahrgestell 19 ist hier nach Art eines Panzer- oder Kettenfahrzeugs mit einem Kettenantrieb und zugehörigen Antriebsmotoren ausgestattet. Die hier nicht näher dargestellten Antriebsmotoren treiben Ketten (Raupenketten) 24 über Räder an, um den 3D-Drucker 4 auf dem Baugrund zu bewegen. Das Fahrgestell 19 kann gelenkt werden, indem die Antriebsmotoren die Geschwindigkeiten der Ketten 24 auf jeder Seite individuell anpassen. Die Ketten 24 können das Gewicht des 3D-Druckers gleichmäßig verteilen und bieten auch einen besseren Halt auf unebenem oder rutschigem Untergrund im Vergleich zu beispielsweise Fahrgestellen mit Rädern. Letztere können aber prinzipiell auch verwendet werden.

Die Koppeleinheit 22 ist mit der Säule 21 gekoppelt und entlang der Säule 21 verschiebbar angeordnet und angetrieben, um den Ausleger 23 in der vertikalen Richtung V zu heben und zu senken. Außerdem ist die Koppeleinheit 22 gemeinsam mit dem Ausleger 23 um die vertikale Säule 21 drehbar angeordnet und angetrieben, so dass der Ausleger 23 in einer horizontalen Ebene um die Säule 21 herum verschwenkt werden kann.

Der Ausleger 23 umfasst hier zwei gekoppelte Auslegerarme mit einem ersten Auslegerarm oder Oberarm 26, der an der Koppeleinheit 22 befestigt ist, und einem zweiten Auslegerarm oder Unterarm 27, der an einem freien Ende des Oberarms 26 drehbar montiert ist. Der Oberarm 26 kann über die Koppeleinheit 22 in Bezug auf die vertikale Säule 21 verdreht werden, während der Unterarm 27 zusätzlich in Bezug auf den Oberarm 26 um eine zu der Hubachse der Säule 21 parallele vertikale Drehachse 28 relativ verdrehbar ist. Somit kann das freie Ende des Unterarms 27 einen beliebigen Punkt innerhalb eines Kreises in einer horizontalen Ebene um die Säule 21 erreichen, der einen Radius aufweist, der der kumulierten Summe der Längen des Oberarms 26 und des Unterarms 27 entspricht. Gemeinsam mit der vertikalen Bewegung der Koppeleinheit 22 relativ zu der Säule 21 kann das freie Ende 29 des Unterarms 27 zu jeder Stelle innerhalb eines entsprechenden Kreiszylinders, der durch den Kreis definiert ist, bewegt werden. Die Antriebsmotoren, die zum Verfahren der Koppeleinheit 22 relativ zu der Säule 21, zum Drehen der Koppeleinheit 22 mit dem Oberarm 26 relativ zu der Säule 21 und zum Drehen des Unterarms 27 relativ zu dem Oberarm 26 benötigt werden, sind in Figur 2 der Einfachheit wegen nicht dargestellt. Es können unterschiedliche Antriebsmotoren, ausschließlich Direktmotoren, Getriebemotoren, etc., verwendet werden.

Das freie Ende 29 des Unterarms 27 trägt einen Druckkopf 31 mit der daran angebrachten Spritzdüse 8. Die Spritzdüse 8 steht über eine hier lediglich angedeutete Fluidleitung 32 mit einer hier nicht näher dargestellten Quelle eines flüssigen Baumaterials, z.B. einer betonbasierten, zementhaltigen chemischen Lösung oder eines alternativen flüssigen Baumaterials, wie z.B. flüssigem Lehm, der Ton und Schluff enthalten kann, in Verbindung. Die Baumaterialquelle kann beispielsweise ein stationärer Vorratsbehälter oder ein oder mehrere mobile Mischer sein. Eine hier nicht näher dargestellte Pumpe kann dazu dienen, das flüssige Baumaterial aus dem Vorratsbehälter oder dem Mischer über die Fluidleitung 32 zu der Spritzdüse 8 zu befördern.

Wie bereits erwähnt, stellt der 3D-Drucker nach Figur 2 lediglich eine einzelne vorteilhafte Ausführungsform eines 3D-Druckers 4 dar, der sich zur Umsetzung des erfindungsgemäßen Verfahrens zum 3D-Drucken eines Gebäudes eignet. Es sind viele andere Konfigurationen eines derartigen 3D-Druckers möglich. Beispielsweise kann die vertikale Säule 21 auch drehbar an der Basis 18 gelagert und der Ausleger 23 an der Säule 21 befestigt sein. Anstatt des Auslegers 23 mit den Auslegerarmen 26, 27 könnte auch ein Teleskoparm verwendet werden, der mehrere teleskopartig ausfahrbare Armglieder umfasst und an dem am weitesten ausfahrbaren Teleskoparm den Druckkopf 31 trägt. Wichtig ist aber, dass der 3D-Drucker 4 im Raum bewegbar, also auf einer horizontalen XY-Ebene verfahrbar ist, deren Normale Z mit der vertikalen Richtung V zusammenfällt. Ein derartiger 3D-Drucker 4 ist zur Durchführung des erfindungsgemäßen Verfahrens vorteilhafterweise einsetzbar.

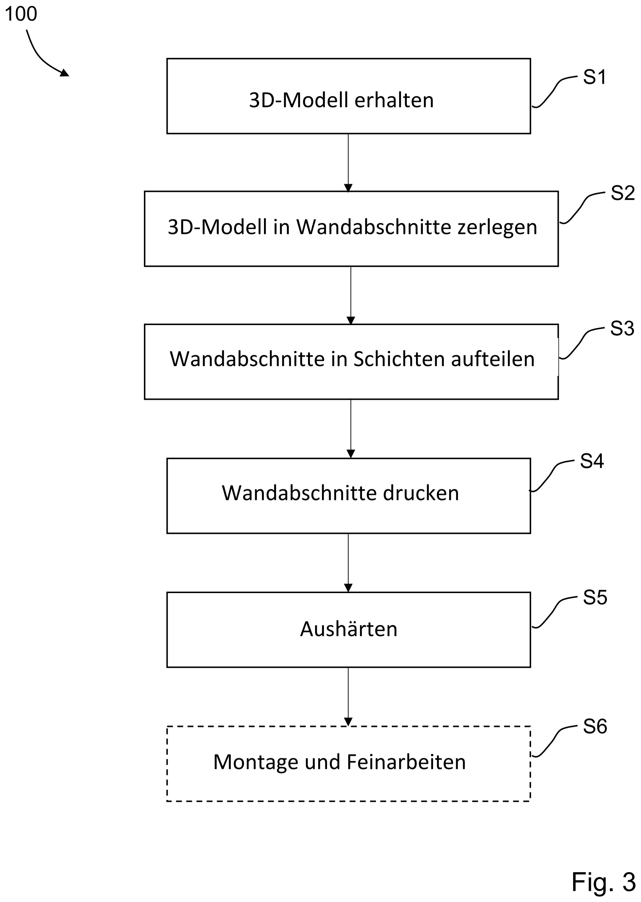

Eine Ausführungsform eines erfindungsgemäßen Verfahrens 100 zum 3D-Drucken eines Gebäudes unter Verwendung eines fließfähigen Baumaterials ist in Figur 3 dargestellt. Das Verfahren 100 kann unter Verwendung des in Figur 1 dargestellten Systems 1 und des in Verbindung mit Figur 2 beschriebenen 3D-Druckers 4 implementiert und durchgeführt werden. Es kann aber auch mit anderen Systemen und 3D-Druckern implementiert werden. Das Gebäude 2, das gedruckt wird, kann ein beliebiges Gebäude, wie beispielsweise ein Ein- oder Mehrfamilienhaus, ein öffentliches Gebäude, ein Fabrikgebäude oder eine sonstige relativ große dreidimensionale Struktur sein, die durch das erfindungsgemäße Verfahren 100 relativ schnell und kosteneffizient additiv gefertigt werden kann.

Das Verfahren 100 umfasst zunächst einen ersten Schritt S1, in dem ein 3D-Modell des zu errichteten Gebäudes 2 erhalten wird. Ein detailliertes 3D-Modell des Gebäudes 2 kann in einer Designphase durch Architekten und Ingenieure mit spezieller Software (CAD-Software) erstellt werden. Die erstellte digitale Datei dient als Basis für einen Bauplan für den 3D-Drucker beim 3D-Drucken des Gebäudes. Das 3D-Modell kann auch ausgehend von 2D-Plänen erstellt werden. Wie bereits erwähnt, wird das 3D-Modell z.B. im STL-Format bereitgestellt.

Als nächstes umfasst das Verfahren 100 im Schritt S2 ein Zerlegen des 3D-Modells des Gebäudes, um Wandabschnitte zu definieren, die nacheinander gedruckt werden sollen. Dabei wird auch eine feste Reihenfolge definiert, in der die Wandabschnitte nacheinander gedruckt werden sollen. Jeder Wandabschnitt hat eine gegebene Höhe und Länge, wobei zumindest einige der Wandabschnitte derart definiert werden, dass benachbarte Wandabschnitte an miteinander verbundenen Anschlusskanten eine in Bezug auf eine horizontale Ebene schräge, gestufte Verbindungsstelle bilden. Hierzu werden für die jeweiligen Wandabschnitte die Anschlusskanten, die den Wandabschnitt in seiner Längserstreckung begrenzen und der Verbindung zu einem benachbarten Wandabschnitt dienen, derart definiert, dass sie eine gestufte Form mit mehreren vertikalen Stufen aufweisen.

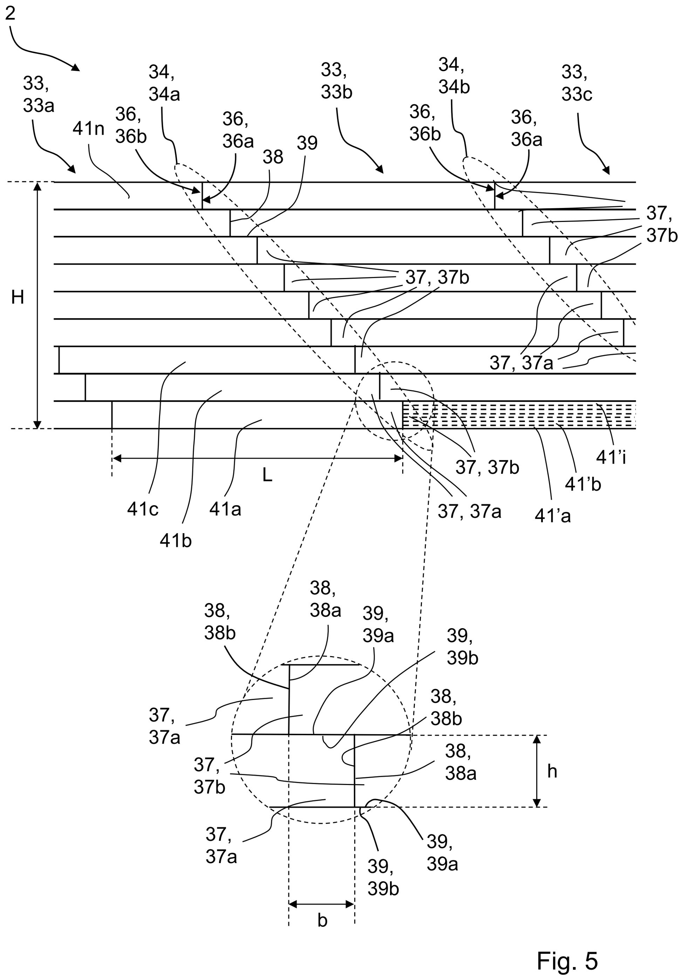

Figur 5 veranschaulicht einen Ausschnitt eines durch 3D-Druck zu erzeugenden Gebäudes 2 mit Wandabschnitten 33, die nacheinander gedruckt werden. Insbesondere sind drei Wandabschnitte 33a, 33b und 33c ausschnittsweise gezeigt, die nebeneinander liegen und in der Richtung von links nach rechts in Figur 5 nacheinander gedruckt werden. Jeder Abschnitt kann eine Länge L, wie dargestellt, haben, wobei die Längen der einzelnen Abschnitte 33a-c gleich sein oder sich voneinander unterscheiden können. Dargestellt ist auch die Höhe H der Gebäudeabschnitte. Wie ersehen werden kann, sind die Abschnitte 33a und 33b über eine schräge, gestufte Verbindungs- bzw. Schnittstelle 34a miteinander verbunden. In ähnlicher Weise sind die Abschnitte 33b - 33c über eine schräge, gestufte Verbindungs- bzw. Schnittstelle 34b miteinander verbunden. Jede Verbindungs- oder Schnittstelle 34, z.B. 34a, 34b, ist durch zwei aufeinanderliegende Anschlusskanten 36 der benachbarten Wandabschnitte gebildet, die eine zueinander passende gestufte Konfiguration aufweisen. Beispielsweise umfasst der Wandabschnitt 33a eine Anschlusskante 36a mit einer Reihe von vertikalen Stufen 37a, die sich von einer Ecke, in Figur 5 der rechten unteren Ecke des Wandabschnitts 33a aus treppenartig, schräg nach oben bis zu der linken oberen Ecke des Wandabschnitts 33a erstecken. Der benachbarte Wandabschnitt 33b weist eine Anschlusskante 36b mit vertikalen Stufen 37b auf, die komplementär zu den Stufen 37a des ersten Wandabschnitts 33a ausgebildet sind (wie eine nach unten gerichtete Treppe) und darin aufgenommen sind, um die schräge, gestufte Verbindungsstelle 34a zu bilden.

In ähnlicher Weise umfasst der zweite Wandabschnitt 33b eine weitere Anschlusskante 36a, die die Länge L des zweiten Wandabschnitts 33b begrenzt und auf der zu der Anschlusskante 36b gegenüberliegenden Seite des Wandabschnitts 33b angeordnet ist, wobei die Anschlusskante 36a eine Reihe vertikaler Stufen 37a umfasst, die komplementäre vertikale Stufen 37b einer Anschlusskante 36b des dritten Wandabschnitts 33c aufnehmen, um die schräge, gestufte Verbindungsstelle 34b zu bilden. Ähnliche gestufte Anschlusskanten 36 können an wenigstens einer Seite eines jeden Wandabschnitts 33 vorgesehen sein, der in dem Schritt S2 durch Zerlegung des 3D-Modells des Gebäudes 2 definiert wird.

Wie aus der Detaildarstellung in Figur 5 ersichtlich, weist jede Stufe 37 (37a, 37b) eine vertikale Anschlussfläche 38 und eine horizontale Anschlussfläche 39 auf. Beim 3D-Druck wird beispielsweise die vertikale Anschlussfläche 38a jeder Stufe 37a der Anschlusskante 36a des ersten Wandabschnitts 33a in Anlage mit der vertikalen Anschlussfläche 38b einer zugehörigen Stufe 37b der Anschlusskante 36b des benachbarten zweiten Wandabschnitts 33b erzeugt, um eine im Wesentlichen vertikale Überlappung zu bilden, während die horizontale Anschlussfläche 39a jeder Stufe 37a der Anschlusskante 36a des ersten Wandabschnitts 33a in Anlage mit der horizontalen Anschlussfläche 39b einer zugehörigen Stufe 37b der Anschlusskante 36b des benachbarten zweiten Wandabschnitts 33b erzeugt wird, um eine im Wesentlichen horizontale Überlappung zu bilden. Die horizontalen und vertikalen Überlappungen können gut gemeinsam aushärten und eine feste Materialverbindung eingehen. Gleiches gilt auch für die vertikalen Anschlussflächen 38 oder Überlappungen und die horizontalen Anschlussflächen 39 oder Überlappungen der Stufen 37 der Anschlusskanten 36 der Verbindungsstelle 34b in Figur 5 und beliebiger anderer schräger, gestufter Verbindungsstellen 34 der Wandabschnitte 33.

Die vertikalen Anschlussflächen 38 oder die vertikalen Überlappungen weisen jeweils eine Höhe h auf, und die horizontalen Anschlussflächen 39 oder die horizontalen Überlappungen weisen jeweils eine Breite b auf. Die Höhe h und die Breite b können im Schritt S2 als Parameter des erfindungsgemäßen Verfahrens vorgebbar sein. Es ist verständlich, dass die Stufen 37a, 37b benachbarter Wandabschnitte 33 mit der gleichen Höhe h und der gleichen Breite b definiert werden, um eine geschlossene Struktur ohne Lücken oder Spalte dazwischen zu bilden. Die Höhe h und/oder die Breite b der Stufen 37 kann/können aber an unterschiedlichen Verbindungs- oder Schnittstellen 34 variieren. Ebenso kann die Länge L der Wandabschnitte je nach Bedarf, z.B. in Eckbereichen oder Wandabschnitten 33 mit komplexen Formen oder in Abhängigkeit von dem jeweiligen Druckparameter variieren.

Zurückkehrend zu Figur 3 enthält ein weiterer Schritt S3 des Verfahrens 100 ein Aufteilen jedes der Wandabschnitte, z.B. der Wandabschnitte 33, in eine festgelegte Reihe von Schichten, die unter Verwendung eines 3D-Druckers übereinander aufzutragen sind, um den jeweiligen Wandabschnitt, z.B. 33, aufzubauen. Wie in Figur 5 veranschaulicht, kann z.B. jede einzelne Schicht 41 (41a-n) dem horizontalen Bereich bzw. der horizontalen Lage jedes Wandabschnitts 33 entsprechen, der eine jeweilige Stufe 37 definiert. Somit weist jede Schicht 41 eines Wandabschnitts 33 die Länge L und die Höhe h auf. In anderen Worten wird in dem Beispiel nach Figur 5 der Wandabschnitt 33a beispielsweise derart aufgeteilt, dass zunächst eine Schicht 41a auf dem Boden des Bauraums aufzutragen ist, während anschließend die Schicht 41b aufgetragen wird, die gegenüber der Schicht 41a in der Höhenrichtung und in der Horizontalrichtung versetzt liegt, um die versetzten vertikalen Stufen 37a zu bilden. Nach der Aufteilung gemäß Schritt S3 sind dann weitere Schichten 41c-n in dieser Reihenfolge übereinander aufzutragen, um den Wandabschnitt 33a zu bilden. Entsprechendes gilt auch für den Wandabschnitt 33b und jeden weiteren Wandabschnitt, der im Schritt S2 definiert wird.

In einer modifizierten Ausführungsform können die Wandabschnitte, z.B. 33, derart in Schichten, z.B. 41', aufgeteilt werden, dass jede horizontale Lage oder jeder horizontale Bereich des Wandabschnitts 33, der bzw. die eine einzelne Stufe 37 definiert, durch mehrere übereinander aufgetragene Schichten gebildet ist. Dies ist beispielsweise in Figur 5 in dem Wandabschnitt 33b anhand der eingezeichneten Schichten 41'a-i verdeutlicht. In anderen Worten werden mehrere Schichten 41'a-i durch die Spritzdüse 8 übereinander und zueinander ausgerichtet aufgetragen, um eine dickere Lage mit der jeweiligen Stufe 37 zu bilden.

Erneut Bezug nehmend auf Figur 3 umfasst das Verfahren 100 nach Figur 3 im nächsten Schritt S4 ferner ein Drucken der Wandabschnitte, z.B. 33, nacheinander in der im Schritt S2 definierten Reihenfolge durch schichtweises Auftragen des fließfähigen Baumaterials mittels des 3D-Druckers, insbesondere der Spritzdüse 8 des 3D-Druckers 4, entsprechend der im Schritt S3 festgelegten Reihe von Schichten, z.B. 41, 41'. In dem Druckvorgang bilden benachbarte Wandabschnitte, z.B. 33a, 33b oder 33b, 33c an den miteinander verbundenen Anschlusskanten 36a, 36b die in Bezug auf eine horizontale Ebene schräge, gestufte Verbindungs- oder Schnittstelle, z.B. 34a, 34b. Es ist festgestellt worden, dass eine derartige schräge, gestufte Verbindungsstelle 34 den aufeinandertreffenden Anschlusskanten 36 ermöglicht, eine starke Verbindung miteinander einzugehen und gemeinsam auszuhärten, so dass kalte Fugen und zugehörige Probleme, wie beispielsweise strukturelle Diskontinuitäten und die dadurch beeinträchtigte Festigkeit und Haltbarkeit sowie eventuelle Wasserdurchlässigkeiten weitgehend vermieden werden können. Dies wird insbesondere durch das Vorsehen der mehreren Stufen 37 an den aufeinandertreffenden Anschlusskanten 36 der Wandabschnitte 33 unterstützt.

Im nächsten Schritt S5 umfasst das Verfahren 100 ein Aushärten der gedruckten Wandabschnitte, z.B. 33, des Gebäudes, z.B. 2. Während des Druckens härtet das fließfähige Baumaterial aus und bildet eine feste Struktur. Dies kann bei Verwendung von Lehm als Baumaterial durch Trocknung an der Luft oder durch chemische Reaktionen zwischen Zement und Wasser beim Abbinden eines Betons erfolgen. Die Wandabschnitte 33 werden derart zeitlich abgestimmt, relativ zeitnah nacheinander gedruckt, dass die gestuften Anschlusskanten 36 benachbarter Wandabschnitte noch im feuchten Zustand miteinander in Kontakt gelangen und erst dann aushärten, so dass die Materialien an den Anschlusskanten 36, insbesondere an den vertikalen und horizontalen Anschlussflächen 38, 39 der Stufen 37, gemeinsam aushärten und sich gut miteinander verbinden können.

Im optionalen Schritt S6 des Verfahrens 100, können nach dem Druck zusätzliche Komponenten, wie Fenster, Türen und Dach, installiert, und Feinarbeiten, wie die Installation von Elektrik- und Sanitäranlagen, durchgeführt werden.

Das erfindungsgemäße Verfahren 100 bietet viele Vorteile. Es ermöglicht eine schnelle und kosteneffiziente Errichtung von Gebäuden mit im Vergleich zu anderen Methoden reduzierten Bauzeiten, reduziertem Materialverbrauch und geringerer Materialverschwendung. Durch einen hohen Automatisierungsgrad ist der genaue Materialverbrauch bekannt und wird auch eingehalten. Es lassen sich sehr komplexe Designs von Gebäuden mit neuen Formen realisieren. Bei Verwendung von Lehm und Ton als Baumaterial kann der CO2-Ausstoß minimiert werden. Die Verwendung natürlicher oder recycelter Baumaterialien und die Reduktion von Abfall erhöhen die Nachhaltigkeit. Kalte Fugen, sogenannte "Cold Joints", bei denen aneinandergefügte Wände oder Schichten eines Baumaterials sich nicht richtig miteinander verbinden, können durch die Erfindung weitgehend vermieden werden.

Das erfindungsgemäße Verfahren kann unter Verwendung eines computergestützten Systems, z.B. des Systems 1 nach Figur 1 implementiert und weitgehend automatisiert durchgeführt werden. Für das Zerlegen des 3D-Modells des Gebäudes in Wandabschnitte und das Aufteilen jedes der Wandabschnitte in eine Reihe von Schichten kann eine auch als "Slicer" bezeichnete spezielle Software verwendet werden, die bei additiven Verfahren oft verwendet wird, um ein Druckobjekt in eine Reihe von zu druckenden Schichten aufzuteilen. Die Slicer-Software kann angepasst werden, um zusätzlich die jeweiligen Wandabschnitte mit den gestuften Anschlusskanten zu definieren. Der Slicer kann dann die definierten Wandabschnitte in die jeweiligen Schichten aufteilen und aus den resultierenden Schichten eine Reihe von Befehlen, z.B. G-Codes (geografische Codes mit XY-Koordinaten) erzeugen, die den 3D-Drucker veranlassen, das Gebäude Schicht für Schicht aufzubauen.

Der Slicer ermöglicht es, verschiedene Druckparameter, wie die Extrusionsgeschwindigkeit, Temperatur und Schichtdicke einzustellen, um die gewünschten Ergebnisse zu erzielen. Mit dem Slicer kann der Druckprozess auch optimiert werden, indem die Bewegungen des 3D-Druckers, z.B. des 3D-Druckers 4 nach Figur 2, geplant werden, um den Materialverbrauch einzusparen und die Druckzeit zu optimieren. Der 3D-Drucker 4 ist in dem Bauraum bewegbar und wird vorzugsweise und vorteilhafterweise zwischen wenigstens einigen aufeinanderfolgenden Schritten zum Drucken benachbarter Wandabschnitte im Raum verfahren, um den 3D-Drucker für das Drucken der jeweiligen Wandabschnitte lagerichtig zu positionieren. Auf diese Weise kann ein relativ kleiner 3D-Drucker 4 auch zum Drucken großer Gebäude genutzt werden. Durch Bewegen des 3D-Druckers zwischen den einzelnen Druckabschnitten zu den geeigneten Positionen kann das Gebäude 2 stetig wachsen, während sichergestellt werden kann, dass keine kalten Fugen an den aneinandergefügten Anschlusskanten der Wandabschnitte entstehen.

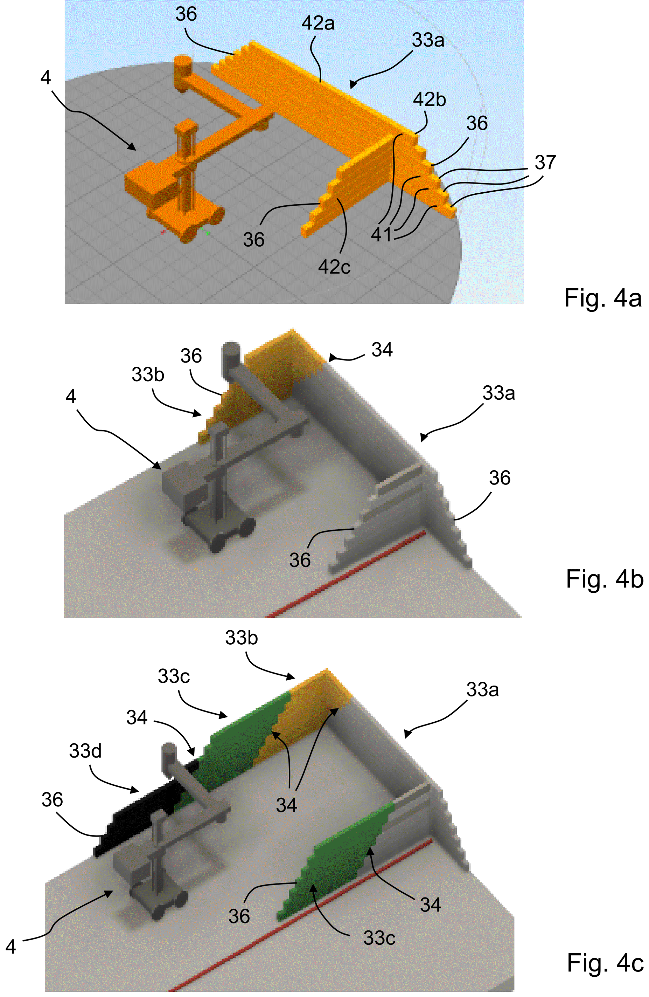

Figuren 4a-4c verdeutlichen den Vorgang des Drucks aufeinanderfolgender Wandabschnitte 33 mit Bewegung des 3D-Druckers zwischen einzelnen Druckabschnitten 33 anhand vereinfachter perspektivischer Darstellungen. Zunächst wird, wie in Figur 4a gezeigt, ein erster Wandabschnitt 33a durch schichtweises Auftragen des Baumaterials gebildet. Wie aus Figur 4a ersichtlich, kann der erste Wandabschnitt 33a auf beiden seinen Seiten, in Längsrichtung des Wandabschnittes 36a betrachtet, schräge, gestufte Anschlusskanten 36 aufweisen. Dies ermöglicht es, die nachfolgenden Wandabschnitte an diese gestuften Anschlusskanten anzuschließen.

Der Wandabschnitt 36a kann auch T-förmig mit drei Wandteilen 42a-c ausgebildet sein, von den zwei Wandteile 42a, 42b in einer Linie angeordnet sind und ein dritter Wandteil 42c im Wesentlichen senkrecht zu den Wandteilen 42a, 42b ausgerichtet ist. Alle drei Wandteile 42a-c können in einem Zug Schicht für Schicht gemeinsam gedruckt werden. Jeder der Wandteile 42a-c ist mit einer gestuften freien Anschlusskante 36 versehen.

Als nächstes wird, wie aus Figur 4b ersichtlich, ein nachfolgender Wandabschnitt 33b im Anschluss an eine Anschlusskante 36 des Wandteils 42a des Wandabschnittes 36a gedruckt. Der Wandabschnitt 33b verläuft in der dargestellten beispielhaften Ausführungsform um eine Ecke des Gebäudes 2 und weist auf beiden Seiten eine gestufte Anschlusskante 36 mit mehreren vertikalen Stufen 37 auf.

Der 3D-Drucker 4 kann anschließend in dem Bauraum verfahren werden, um weitere Wandabschnitte 33c schichtweise aufzubauen. Wie aus Figur 4c ersichtlich, werden die weiteren Wandabschnitte 33c im Anschluss an den Wandabschnitt 33b und den Wandteil 42c des Wandabschnittes 33a gedruckt. Vorzugsweise können beide Wandabschnitte 33c in einer Position des 3D-Druckers erzeugt werden. Anschließend kann der 3D-Drucker 4 in die nächste Position überführt werden, um weitere Wandabschnitte, z.B. den dargestellten Wandabschnitt 33d, zu drucken. Dies kann so fortgeführt werden, bis das gesamte Gebäude 2 gedruckt ist. In jedem Teilschritt werden die nachfolgenden Wandabschnitte 33 mit ihren Anschlusskanten 36 derart gedruckt, dass die schrägen, gestuften Verbindungsstellen 34 zwischen benachbarten Wandabschnitten 33 gebildet werden.

Das erfindungsgemäße Verfahren 100 kann in vielerlei Hinsicht optimiert oder modifiziert werden. Z.B. können die Anzahl der Stufen 37, die Höhe h jeder Stufe 37 und die Breite b der Stufe 37 bedarfsgemäß definiert werden. Es ist festgestellt worden, dass bei einer üblichen Höhe H eines Raumes eines Gebäudes 2 von beispielsweise 2,3 m bis 3,0 m die Anschlusskanten und vorzugsweise jede Anschlusskante mehrere, also mehr als zwei, vorzugsweise wenigstens 4 oder sogar 8 Stufen oder mehr aufweisen sollte, um den gewünschten Effekt zu erzielen. Das Verhältnis der Breite b jeder Stufe 37, die die horizontale Überlappung der Stufen 37 vorgibt, zu der Höhe h der Stufe 37, die die vertikale Überlappung bestimmt, sollte möglichst 1:2 oder vorzugsweise mindestens 1:1 betragen. In dem dargestellten besonders bevorzugten Ausführungsbeispiel gemäß den Figuren 4 und 5, sind die Höhe h und die Breite b jeder Stufe 37 gleich. Jede schräge, gestufte Verbindungsstelle 34 bildet somit einen Winkel von etwa 45° zur Horizontalen. Die vertikalen und horizontalen Überlappungen der Stufen 37 der Anschlusskanten 36 benachbarter Wandabschnitte 33 bilden die Basis für eine gute Verbindung beim Aushärten oder Trocknen des Baumaterials, die Fehlstellen oder strukturelle Diskontinuitäten vermeidet.

Wenngleich in einer besonders einfachen Ausführungsform des erfindungsgemäßen Verfahrens 100 die Stufen 37 der Anschlusskanten 36 aller Wandabschnitte 33 vorzugsweise die gleiche Breite b und/oder die gleiche Höhe h haben sollten, ist es prinzipiell auch möglich, die Breite b und/oder Höhe h je nach Wandabschnitt 33 zu variieren. Dies kann beispielsweise in Eckbereichen oder komplex geformten Bereichen von Gebäuden vorteilhaft sein. Besonders bevorzugt haben aber alle Wandabschnitte 33 an allen Anschlusskanten 36 eine schräge, gestufte Konfiguration mit gleichen oder gleichen komplementären Formen und Größen der Stufen 37.

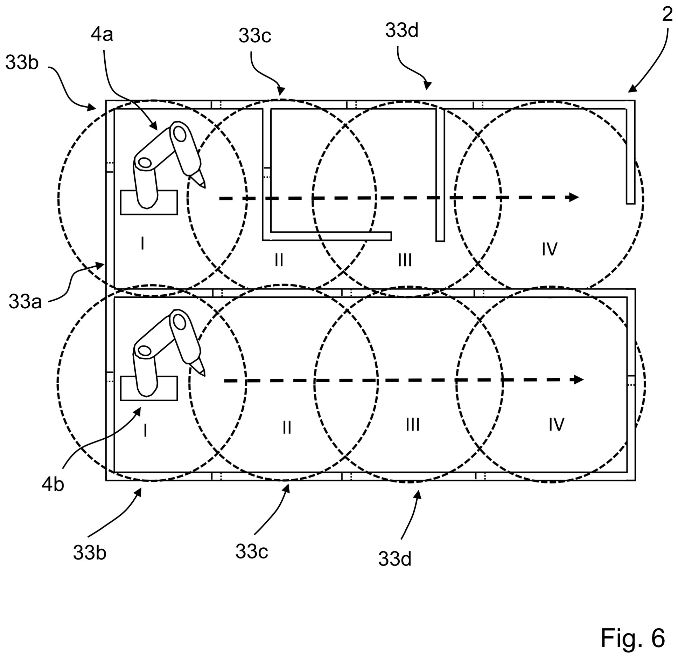

Eine vorteilhafte Weiterbildung des erfindungsgemäßen Verfahrens 100 ist in Figur 6 dargestellt. Wie daraus ersichtlich, werden hier zwei 3D-Drucker 4a, 4b zeitgleich betrieben, um Wandabschnitte 33 simultan zu drucken. Das Zerlegen des 3D-Modells des Gebäudes 2 in Wandabschnitte 33 und das Aufteilen jedes der Wandabschnitte 33 in die Schichten 41, 41' gemäß den Schritten S2 und S3 wird derart vorgenommen, dass das Gebäude 2 relativ schnell und kosteneffizient, mit verhältnismäßig kleinen 3D-Druckern 4a, 4b erzeugt werden kann. Wie in Figur 6 angedeutet, werden die 3D-Drucker 4a, 4b zwischen dem Drucken bestimmter Bereiche des Gebäudes 2 verfahren, um die einzelnen Bereiche I-IV nacheinander zu drucken. Die Verwendung von wenigstens zwei 3D-Druckern 4a, 4b kann die Bauzeit zusätzlich reduzieren und insbesondere die Verzögerung des Druckens benachbarter Wandabschnitte minimieren, um die Gefahr der Entstehung kalter Fugen zwischen den Wandabschnitten weiter zu reduzieren.

Es können auch mehr als zwei 3D-Drucker 4 zum schnellen Erzeugen von größeren Gebäuden simultan betrieben werden. Die 3D-Drucker 4 können auch von unterschiedlichen Bereichen, z.B. Ecken, eines Gebäudes 2 aus starten und aufeinander zu bewegt werden, um die Gebäudeabschnitte zu erzeugen. Die zwei oder mehreren 3D-Drucker 4 müssen nicht auf parallelen Pfaden, wie in Figur 6 angedeutet, verfahren werden, sondern können auf unterschiedlichen, voneinander unabhängigen Pfaden, aber in koordinierter Weise betrieben werden, um die zugehörigen Wandabschnitte jeweils zu drucken und schnell zusammenzufügen.

In weiteren vorteilhaften Ausführungsformen kann der Extruder bzw. die Spritzdüse 8 des oder der 3D-Drucker 4 um wenigstens eine horizontale Achse verschwenkbar eingerichtet sein (nicht dargestellt). Die Spritzdüse 8 kann dann beim Drucken, gleichzeitig mit einer Bewegung der Spritzdüse 8 in dem Bauraum oder mit dem Verfahren des 3D-Druckers 4, in einem gewünschten variablen Winkel relativ zu einer horizontalen Druckebene ausgerichtet werden, um das Baumaterial gezielt in verschiedenen Orientierungen aufzutragen. Dies ermöglicht es, geneigte, gekrümmte oder andere kompliziert gestaltete Strukturen in Gebäudewänden und -decken durch 3D-Druck relativ aufwandsarm zu realisieren. Beispielsweise lässt sich ein Tür- oder Fenstersturz, z.B. ein Sturzbogen, in einem Wandabschnitt drucken, ohne hierzu zusätzlich einen Träger aus Stahl, Beton oder dergleichen verwenden zu müssen.

Es ist ein Verfahren 100 zum 3D-Drucken eines Gebäudes 2 unter Verwendung eines fließfähigen Baumaterials geschaffen. In dem Verfahren 100 wird in einem ersten Schritt S1 ein 3D-Modell des Gebäudes 2 erstellt. In einem nächsten Schritt S2 wird das 3D-Modell des Gebäudes 2 in Wandabschnitte 33, 33a-d zerlegt, und es wird eine Reihenfolge definiert, in der die Wandabschnitte 33, 33a-d nacheinander gedruckt werden sollen. Jeder Wandabschnitt 33, 33a-d wird mit wenigstens einer Anschlusskante 36, 36a, 36b definiert, die der Verbindung mit einem benachbarten Wandabschnitt 33, 33a-d dient und die eine gestufte Konfiguration mit mehreren vertikalen Stufen 37, 37a, 37b aufweist. In einem weiteren Schritt S3 wird jeder der Wandabschnitte 33, 33a-d in eine festgelegte Reihe von Schichten 41, 41a-n, 41'a-i aufgeteilt, die unter Verwendung eines 3D-Druckers 4, 4a, 4b übereinander aufzutragen sind, um den jeweiligen Wandabschnitt 33, 33a-d aufzubauen. In einem noch weiteren Schritt S4 werden die Wandabschnitte 33, 33a-d nacheinander in der definierten Reihenfolge durch schichtweises Auftragen des fließfähigen Baumaterials mittels des 3D-Druckers 4, 4a, 4b entsprechend der festgelegten Reihe von Schichten 41, 41a-n, 41'a-i gedruckt, um das Gebäude 2 physisch zu erzeugen. Die Wandabschnitte 33, 33a-d werden derart gedruckt, dass benachbarte Wandabschnitte 33, 33a-d an miteinander verbundenen Anschlusskanten 36, 36a, 36b eine in Bezug auf eine horizontale Ebene schräge, gestufte Verbindungsstelle 34, 34a, 34b bilden.

## Patentansprüche

1. Verfahren (100) zum 3D-Drucken eines Gebäudes (2) unter Verwendung eines fließfähigen Baumaterials, wobei das Verfahren aufweist
Erhalten eines 3D-Modells des Gebäudes (2) (S1);
Zerlegen des 3D-Modells des Gebäudes (2), um Wandabschnitte (33, 33a-d) und eine Reihenfolge zu definieren, in der die Wandabschnitte (33, 33a-d) nacheinander gedruckt werden sollen, wobei jeder Wandabschnitt (33, 33a-d) eine gegebene Höhe (H) und Länge (L) hat und wenigstens eine Anschlusskante (36, 36a, 36b) aufweist, die die Länge (L) des Wandabschnitts (33, 33a-d) begrenzt und der Verbindung mit einem benachbarten Wandabschnitt (33, 33a-d) dient, wobei die wenigstens eine Anschlusskante (36, 36a, 36b) eine gestufte Konfiguration mit mehreren vertikalen Stufen (37, 37a, 37b) aufweist (S2);
Aufteilen jedes der Wandabschnitte (33, 33a-d) in eine festgelegte Reihe von Schichten (41, 41a-n, 41'a-i), die unter Verwendung eines 3D-Druckers (4, 4a, 4b) übereinander aufzutragen sind, um den jeweiligen Wandabschnitt (33, 33a-d) aufzubauen (S3); und
Drucken der Wandabschnitte (33, 33a-d) nacheinander in der definierten Reihenfolge durch schichtweises Auftragen des fließfähigen Baumaterials mittels des 3D-Druckers (4, 4a, 4b) entsprechend der festgelegten Reihe von Schichten (41, 41a-n, 41'a-i), wobei benachbarte Wandabschnitte (33, 33a-d) an miteinander verbundenen Anschlusskanten (36, 36a, 36b) eine in Bezug auf eine horizontale Ebene schräge, gestufte Verbindungsstelle (34, 34a, 34b) bilden (S4).

2. Verfahren (100) nach Anspruch 1, wobei die Länge (L) der Wandabschnitte (33, 33a-d) und die Größe der Stufen (37, 37a, 37b) auf der Basis der Aushärteeigenschaften und Fließeigenschaften des eingesetzten Baumaterials und der Druckgeschwindigkeit sowie vorzugsweise unter Berücksichtigung der Luftfeuchtigkeit und/oder der Temperatur am Aufbauort festgelegt werden.

3. Verfahren (100) nach Anspruch 1 oder 2, wobei jede Stufe (37, 37a, 37b) der wenigstens einen Anschlusskante (36, 36a, 36b) derart definiert und gedruckt wird, dass sie eine vertikale Anschlussfläche (38, 38a, 38b) und eine horizontale Anschlussfläche (39, 39a, 39b) aufweist.

4. Verfahren (100) nach einem der vorhergehenden Ansprüche, wobei jede Stufe (37, 37a, 37b) der wenigstens einen Anschlusskante (36, 36a, 36b) derart definiert und gedruckt wird, dass die Breite (b) mindestens gleich der Hälfte der Höhe (h) der Stufe (37, 37a, 37b) ist, vorzugsweise mindestens gleich der Höhe (h) der Stufe (37, 37a, 37b) ist.

5. Verfahren (100) nach Anspruch 4, wobei die Breite (b) und die Höhe (h) jeder Stufe (37, 37a, 37b) der wenigstens einen Anschlusskante (36, 36a, 36b) in etwa gleich sind.

6. Verfahren (100) nach einem der vorhergehenden Ansprüche, wobei die wenigstens eine Anschlusskante (36, 36a, 36b) mit mehr als zwei, vorzugsweise wenigstens vier, besonders bevorzugt wenigstens acht Stufen (37, 37a, 37b) definiert und gedruckt wird.

7. Verfahren (100) nach einem der vorhergehenden Ansprüche, wobei jede horizontale Lage eines der Wandabschnitte (33, 33a-d), die eine Stufe (37, 37a, 37b) definiert, durch eine einzige aufgetragene Schicht (41, 41a-n) des Baumaterials gebildet wird.

8. Verfahren (100) nach einem der Ansprüche 1-6, wobei jede horizontale Lage eines der Wandabschnitte (33, 33a-d), die eine Stufe (37, 37a, 37b) definiert, durch mehrere übereinander aufgetragene Schichten (41'a-i) des Baumaterials gebildet wird.

9. Verfahren (100) nach einem der vorhergehenden Ansprüche, wobei jede Schicht (41, 41a-n, 41'a-i) in einer horizontalen Ebene aufgetragen wird.

10. Verfahren (100) nach einem der vorhergehenden Ansprüche, wobei ein Wandabschnitt (33a) derart definiert und gedruckt wird, dass er schräge, gestufte Anschlusskanten (36, 36a, 36b) auf beiden Seiten aufweist.

11. Verfahren (100) nach einem der vorhergehenden Ansprüche, wobei ein Wandabschnitt (33a) derart festgelegt und gedruckt wird, dass er mehr als zwei Anschlusskanten (36a-d) und eine schräge, gestufte Konfiguration an allen Anschlusskanten (36a-d) aufweist.

12. Verfahren (100) nach einem der vorhergehenden Ansprüche, wobei alle Wandabschnitte (33, 33a-d) des Gebäudes (2) an allen Anschlusskanten (33, 33a-d) eine schräge, gestufte Konfiguration aufweisen.

13. Verfahren (100) nach einem der vorhergehenden Ansprüche, wobei der 3D-Drucker (4, 4a, 4b) zwischen nacheinander gedruckten Wandabschnitten (33, 33a-d) in seiner Position verfahren wird.

14. Verfahren (100) nach einem der vorhergehenden Ansprüche, wobei eine Spritzdüse (8) des 3D-Druckers (4a, 4b) beim Drucken in einem variablen Winkel relativ zu einer horizontalen Druckebene ausgerichtet wird, um das Baumaterial in verschiedenen Orientierungen aufzutragen.

15. Verfahren (100) nach einem der vorhergehenden Ansprüche, wobei wenigstens zwei 3D-Drucker (4a, 4b) zeitgleich betrieben werden, um Wandabschnitte (33, 33a-d) simultan zu drucken.
